# FASCICULE DE BREVET EUROPEEN

(11) **EP 0 665 931 B1**
(45) Date de publication et mention de la délivrance du brevet: **08.05.1996**
(21) Numéro de dépôt: 93924106.3
(22) Date de dépôt: 25.10.1993
(51) Int. Cl.: F16H 25/20, B65D 83/76

(54) **APPAREIL APPLICATEUR D'UN FLUIDE VISQUEUX PAR L'ENTRAINEMENT EN TRANSLATION D'UNE PIECE PAR LA ROTATION D'UNE TIGE TRAVERSANT CETTE PIECE**
VORRICHTUNG ZUM AUFTRAGEN VISKOSER MASSEN MITTELS GERADLINIGER BEWEGUNGEINES TEILES DURCH DREHUNG EINER DIESES TEIL DURCHDRINGENDEN STANGE
DEVICE FOR APPLYING A VISCOUS FLUID BY THE TRANSLATION OF A PART DUE TO ROTATION OF A ROD PASSING THROUGH SAID PART

(30) Priorité: 28.10.1992 FR 9212885
(43) Date de publication de la demande: 09.08.1995
(73) Titulaire: LVMH RECHERCHE, F-92752 Nanterre (FR)
(72) Inventeur: LHUISSET, François, Noel, Benoît, F-91230 Montgeron (FR); FOLTETE, Daniel, F-25000 Besançon (FR); NORMAND, Gérard, F-25320 Boussières (FR)
(74) Mandataire: Durand, Yves Armand Louis
(86) Numéro de dépôt international: FR9301041
(87) Numéro de publication internationale: WO9410481

(56) Documents cités:
- CH-A- 121 776
- DE-C- 519 479
- DE-U- 9 103 380
- US-A- 3 557 655
- US-A- 3 570 361
- US-A- 4 019 654

## Description

La présente invention se rapporte d'une manière générale à un dispositif d'entraînement en translation d'une pièce par la rotation d'une tige ou analogue traversant cette pièce, du type décrit dans le brevet US-A-4 019 654, qui divulgue les caractéristiques du préambule de la revendication 1.

Elle concerne plus particulièrement un appareil applicateur de fluide plus ou moins visqueux, tel que par exemple du vernis à ongle, équipé de ce dispositif.

On sait que les vérins hydrauliques se composent en général d'une tige qui pousse un piston dans un cylindre. Mais l'encombrement présenté par de tels vérins est d'environ deux fois la longueur de la tige, ce qui constitue un inconvénient lorsqu'on doit les utiliser dans un appareil devant nécessairement présenter un très faible encombrement.

D'un autre côté, on a déjà proposé des systèmes dans lesquels une tige extérieurement filetée traverse un piston maintenu immobile en rotation, de sorte que la rotation de la tige permet la translation du piston le long de ladite tige.

Mais un tel système n'est pas sans inconvénient, notamment au niveau de l'étanchéité entre tige et piston, laquelle étanchéité est souvent imparfaite sans parler de l'encrassement possible du système.

Aussi, la présente invention a pour but de remédier notamment aux inconvénients ci-dessus en proposant un dispositif d'entraînement de structure apte à conférer toutes les qualités d'étanchéité requises entre tige et piston.

A cet effet, et d'une manière générale, la présente invention a pour objet un dispositif d'entraînement en translation d'une pièce par la rotation d'une tige ou analogue traversant ladite pièce qui est maintenue immobile en rotation, caractérisé en ce que ladite pièce est munie d'au moins une lame dont le tranchant est incliné par rapport à l'axe longitudinal de la tige et fait latéralement saillie à travers l'orifice de la pièce traversée par la tige pour venir mordre la périphérie externe lisse de cette tige de façon à l'inciser hélicoïdalement lors de sa rotation et provoquer ainsi la translation de la pièce le long de la tige lors de cette rotation.

On comprend donc déjà que la lame constitue un moyen simple pour permettre la translation de la pièce sous l'effet de la rotation de la tige.

Suivant un premier mode de réalisation, la lame est montée dans la pièce de telle façon que son plan soit sensiblement perpendiculaire au plan tangent à la surface latérale externe de la tige, ledit plan étant parallèle au tranchant de la lame.

Selon un autre mode de réalisation, la lame est montée dans la pièce de façon que son plan soit incliné par rapport au plan tangent à la surface latérale externe de la tige, ledit plan étant parallèle au tranchant de la lame.

On précisera ici que, dans ce cas, le plan de la lame est de préférence incliné par rapport au plan tangent précité, du côté du sens de progression de la pièce précitée.

Suivant une réalisation particulière, le tranchant de la lame peut être en forme de dièdre droit et peut être constitué par une arête d'un bord de plaque parallélépipèdique.

Selon encore une autre caractéristique de l'invention, l'inclinaison du tranchant de la lame par rapport à l'axe de la tige est telle que la composante axiale de la force exercée sur la lame par l'effet de la rotation de la tige est nettement plus élevée que la composante tangentielle de cette force.

Le dispositif selon l'invention est encore caractérisé par le fait que la lame précitée se compose de plusieurs lames montées et agencées dans la pièce de façon que leur tranchant soit orienté suivant une hélice cylindrique régulière, ou bien forme une seule lame dont le tranchant suit une ligne hélicoïdale cylindrique régulière.

Les lames précitées peuvent être formées par les deux branches en vis-à-vis d'un organe déformable sensiblement en forme de U dont les branches sont respectivement insérables dans deux orifices qui sont ménagés obliquement dans la pièce précitée et qui sont décalés axialement et s'étendent de part et d'autre de l'axe de ladite pièce.

Suivant un autre mode de réalisation, les lames précitées sont découpées dans une rondelle rendue solidaire de la pièce précitée.

La rondelle comporte une partie repliée permettant son accrochage sur un élément solidaire de la pièce précitée.

Dans le cas d'une lame unique à tranchant de forme hélicoïdale, cette lame résulte d'une empreinte pratiquée sur une rondelle ou analogue.

Suivant encore une autre caractéristique du dispositif selon cette invention, la pièce précitée est munie d'au moins un joint d'étanchéité situé en avant de la ou des lames précitées pour toujours coopérer avec la périphérie externe lisse de la tige, de sorte que l'étanchéité entre tige et pièce sera toujours parfaite.

Selon un mode de réalisation préféré, la pièce précitée est constituée par un piston qui coulisse de façon étanche dans un corps creux formant récipient, tandis que la tige est actionnée en rotation d'un côté du piston par un moyen approprié tel qu'un bouton rotatif, un bouton-poussoir ou analogue, l'autre côté du piston délimitant avec le corps creux un réservoir de produit.

La tige précitée peut être une tige creuse dont une extrémité débouche dans le réservoir.

Le dispositif de cette invention est encore caractérisé par au moins un autre joint d'étanchéité entre la périphérie du piston et la paroi du corps creux.

Le dispositif de l'invention est encore caractérisé par un moyen applicateur, tel qu'un pinceau, une brosse ou un embout en mousse, en feutre ou en velours, monté sur l'autre extrémité de la tige creuse.

On précisera encore ici que l'autre extrémité précitée de la tige creuse forme une tête faisant saillie de façon étanche du corps creux grâce à encore un autre joint.

La pièce précitée formant piston pourra être munie d'un élément coupant, tel qu'une lame, qui entaille longitudinalement la périphérie interne du corps creux pour immobiliser en rotation le piston lors de sa progression dans ledit corps creux.

Le dispositif faisant l'objet de cette invention peut être avantageusement appliqué à la réalisation d'un appareil applicateur de fluide plus ou moins visqueux tel que par exemple une crème ou du vernis à ongle.

Mais d'autres avantages et caractéristiques de l'invention apparaîtront mieux dans la description détaillée qui suit et se réfère aux dessins annexés, donnés uniquement à titre d'exemple, et dans lesquels :
- la figure 1 est une vue très schématique en élévation et coupe axiale d'un appareil applicateur équipé du dispositif selon cette invention ;
- la figure 2 est une vue en perspective partielle et agrandie illustrant la position de la lame par rapport à la tige ;
- la figure 3 est une vue similaire à la figure 2, mais illustrant un autre type de lame et une autre position relative de cette lame par rapport à la tige ;
- la figure 4 est une vue schématique et en perspective d'un autre mode de réalisation avec plusieurs lames agencées suivant une hélice cylindrique régulière, la tige n'étant pas représentée ici ;
- la figure 5 est une vue partielle et en coupe axiale du dispositif de l'invention comportant les lames de la figure 4 ;
- la figure 6 est une vue en perspective du dispositif de l'invention pouvant être équipé d'un autre mode de réalisation de lame ;
- la figure 7 est une vue en coupe suivant la ligne VII-VII de la figure 6 et montrant les lames en position active et montée sur le piston ;
- la figure 8 est une vue de côté d'une rondelle dans laquelle sont découpées et formées des lames agencées selon l'invention ;
- la figure 9 est une vue de face de cette rondelle, suivant la flèche IX-IX de la figure ;
- la figure 10 est une vue en perspective d'une pièce formant piston auquel est associée une rondelle similaire à celle représentée sur les figures 8 et 9 ;
- la figure 11 est une vue en perspective d'un autre mode de réalisation de rondelle ;
- la figure 12 est une vue partielle et en coupe axiale du dispositif de l'invention équipé de la rondelle selon la figure 11; et
- la figure 13 est une vue schématique et en coupe axiale d'un appareil applicateur équipé d'une rondelle suivant la figure 11.

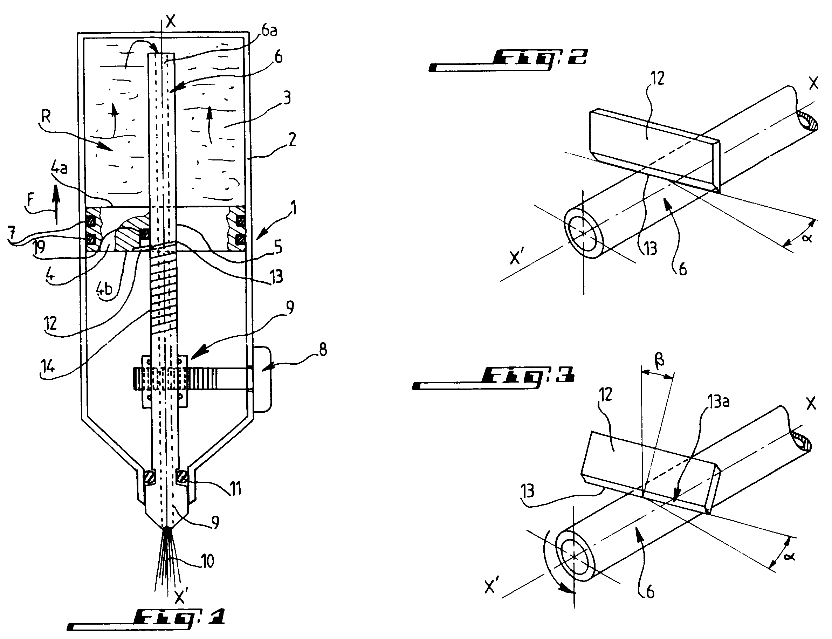

Suivant l'exemple de réalisation visible sur la figure 1, le dispositif selon cette invention équipe un appareil applicateur 1 comportant essentiellement un corps creux 2 formant récipient pour un liquide quelconque et plus ou moins visqueux 3 constitué par du vernis à ongle par exemple.

Dans le corps 2 est monté axialement coulissant un piston 4 muni d'un orifice central 5 traversé par une tige 6 qui est creuse et extérieurement lisse.

Cette tige creuse 6 débouche par une extrémité 6a dans un réservoir à fluide R délimité par le corps creux 2 et un côté 4a du piston 4 qui comporte sur sa périphérie un ou plusieurs joints d'étanchéité tels que 7. Ces joints, comme on le décrira en détail ultérieurement, permettent l'immobilisation en rotation du piston 4 sous l'effet de la rotation de la tige de manoeuvre 6, sans toutefois empêcher la translation du piston 4 dans le corps 2.

La tige 6, du côté 4b du piston 4, est entraînée en rotation par un bouton 8 coopérant avec la périphérie externe de ladite tige, par tout moyen approprié et représenté très schématiquement en 9. Le bouton 8 peut par exemple fonctionner à rotation et comporter un filetage engrenant avec un pignon solidaire de la tige 6, ou bien le bouton 8 peut être encore un bouton-poussoir muni d'une crémaillère et coopérant avec une roue à rochet solidaire de la tige 6, de façon qu'une impulsion sur le bouton 8 provoque une courte rotation de la tige 6, et donc une translation du piston 4 qui comprime le liquide 3 dans le réservoir R. Ainsi, comme matérialisé par des flèches sur la figure 1, le fluide passera au travers de la tige 6 pour sortir par l'autre extrémité 9 de cette tige, comportant un pinceau applicateur 10. L'extrémité 9 forme en quelque sorte une tête qui fait saillie de façon étanche du corps creux 2, grâce à un joint repéré en 1 1 sur la figure 1.

Toutes les dispositions décrites ci-dessus sont connues en soi et ne nécessitent pas d'explications complémentaires.

Suivant l'invention, et comme on le voit sur la figure 1, dans le piston 4 que l'on a appelé aussi "pièce" dans cette description, est montée au moins une lame 12 dont le tranchant 13 est incliné par rapport à l'axe longitudinal X-X' de la tige 2.

Plus précisément, le tranchant 13 de la lame 12 fait saillie dans l'orifice 5 de la pièce ou piston 4 traversé par la tige 6 pour venir mordre la périphérie externe lisse et relativement tendre de cette tige de façon à l'inciser hélicoïdalement, comme on le voit en 14, lors de sa rotation et provoquer ainsi la translation de la pièce 4 le long de la tige 6 lors de cette rotation. Autrement dit, la mise en rotation de la tige extérieurement lisse 6 par le bouton 8 engendrera un filetage sur cette tige pour faire avancer la pièce 4 dans la direction matérialisée par la flèche F.

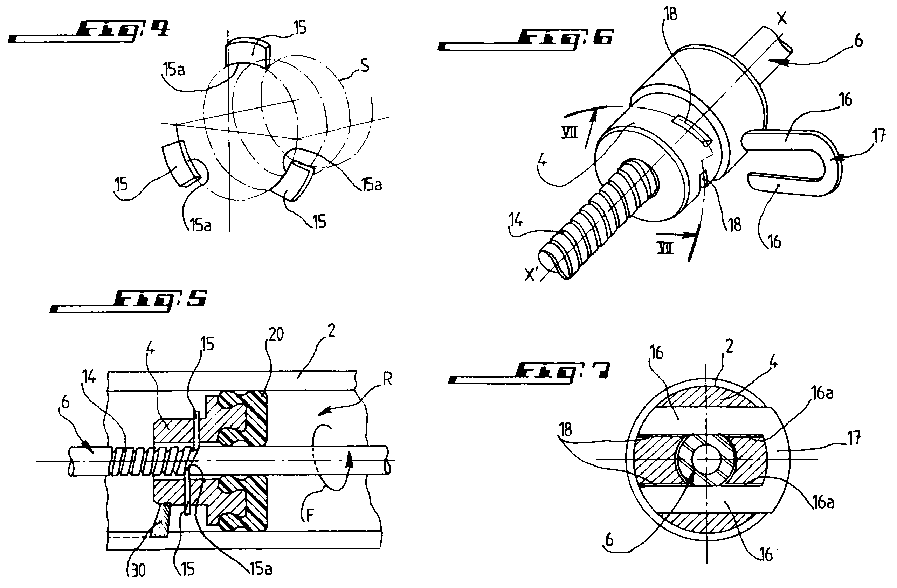

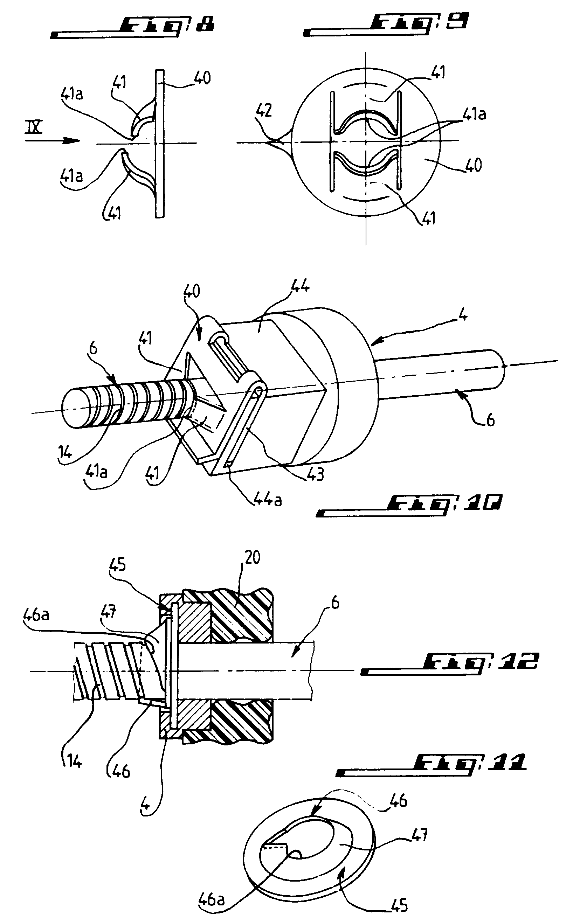

L'angle α (figures 2 et 3) d'inclinaison du tranchant auto-taraudeur 13 de la lame 12 par rapport à une direction orthogonale à l'axe X-X' de la tige 6 doit être évidemment un angle aigu pour permettre la formation du sillon hélicoïdal 14 permettant le déplacement de la pièce ou piston 4 qui, on le rappellera, est maintenu immobile en rotation, par exemple grâce aux joints d'étanchéité 7. Cet angle α aura une valeur telle que la composante axiale de la force exercée sur la lame 12 par l'effet de la rotation de la tige 6 soit plus élevée que la composante tangentielle de cette force. Par exemple, la composante axiale, qui tend à faire déplacer la pièce 4 le long de la tige 6, peut être environ 5 à 10 fois plus élevée que la composante tangentielle, qui tend à faire tourner la pièce 4 autour de la tige 6. Cette caractéristique est particulièrement importante dans le cas où la pièce 4 est constituée par un piston, comme représenté sur la figure 1, et que son maintien immobile en rotation est assuré par les forces de frottement des joints d'étanchéité 7 contre la paroi interne du corps creux 2.

La lame 12, comme il apparaît clairement sur la figure 2, comporte un tranchant 13 en forme de dièdre qui ici est réalisé par un simple chanfreinage, étant entendu qu'un affûtage, suivant un angle quelconque, de la lame peut être réalisé, sans sortir du cadre de l'invention. De plus, on voit sur la figure 2 que le plan de la lame 12 montée dans la pièce 4 est sensiblement perpendiculaire à la surface externe lisse de la tige creuse 6, c'est-à-dire, plus précisément, à un plan tangent à la surface latérale externe de la tige 6, ledit plan tangent étant parallèle au tranchant 13 de la lame 12.

Dans le mode de réalisation illustré par la figure 3, le tranchant 13 de la lame 12 est en forme de dièdre droit constitué par une arête d'un bord 13a de plaque parallélépipèdique. Par conséquent, la lame 12 est ici montée dans la pièce 4 de telle façon que son plan soit incliné, comme matérialisé par l'angle β, sur la surface externe de la tige creuse 6. Plus précisément, le plan de la lame 12 est incliné par rapport à un plan tangent à la surface latérale externe de la tige 6, ledit plan tangent étant parallèle au tranchant 13 de la lame.

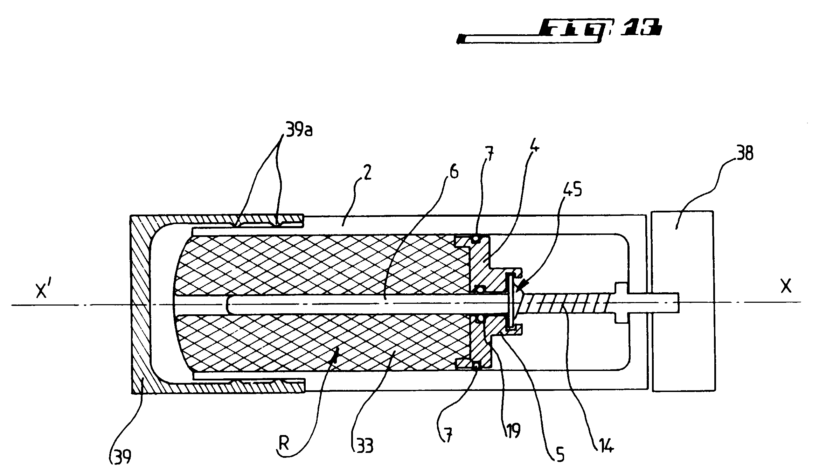

Dans le mode de réalisation de la figure 4, la lame se compose en réalité d'une pluralité de lames 15, trois suivant l'exemple représenté, montées dans la pièce ou piston 4 de façon que leurs tranchants 15a suivent tous une hélice cylindrique régulière de même pas. De préférence, les hélices générées par les lames sont confondues en une seule hélice cylindrique régulière S, ce qui réduira l'effort à exercer pour faire tourner la tige 6.

Ces lames 15, que l'on voit encore sur la figure 5 peuvent être montées dans la pièce 4 de toute façon appropriée et non représentée, comme c'est le cas de la lame 12 illustrée dans les figures 2 et 3.

On voit clairement sur la figure 5 le sillon hélicoïdal 14 formé sur l'extérieur de la tige 6 lors de la rotation de celle-ci suivant la flèche F et permettant le déplacement du piston 4 vers la droite de la figure 5.

Dans la variante illustrée par les figures 6 et 7, la lame se compose en réalité de deux lames 16 constituées par les deux branches en vis-à-vis d'un organe en forme de U 17. Les lames ou branches 16 du U 17 sont respectivement insérables dans deux orifices 18 qui sont ménagés dans la pièce 4 et qui sont axialement décalés, comme on le voit bien sur la figure 6. Ainsi, les orifices 18 assureront la mise en pression des lames 16 sur la tige 6 de part et d'autre de son axe X-X' tout en conférant à ces lames une inclinaison correcte sur ledit axe. Comme on le voit clairement sur la figure 7, ce sont les bords en vis-à-vis 16a formant tranchants des branches ou lames 16 qui inciseront la surface externe de la tige creuse 6.

Il est parfaitement possible, sans sortir du cadre de l'invention, de prévoir d'autres modes de réalisation pour les lames, sans sortir du cadre de l'invention.

Ainsi, comme on le voit sur les figures 8 et 9, les lames peuvent être constituées par deux lames en vis-à-vis 41, qui sont découpées dans une rondelle 40 qui peut être rendue solidaire de la pièce ou piston 4 par tout moyen approprié.

Par exemple, comme on le voit sur la figure 10, la rondelle 40 peut revêtir une forme sensiblement rectangulaire et être repliée sur elle-même, de façon qu'une partie repliée 43 de cette rondelle permette son accrochage sur un élément 44 solidaire de la pièce ou piston 4. On voit en 44a sur la figure 10, un logement pratiqué dans l'élément 44 et dans lequel s'insère la partie repliée 43 de la rondelle 40. Il est à noter que l'élément 44 pourrait être aussi tout simplement surmoulé sur la rondelle 40 dont les lames 41 comportent bien évidemment des tranchants 41a susceptibles de venir en prise avec la tige 6 pour y créer le sillon hélicoïdal 14.

Sur les figures 11 et 12, on a représenté un autre mode de réalisation de rondelle 45 dans laquelle est réalisée une empreinte 47 définissant une lame 46 à tranchant 46a de forme hélicoïdale. Cette rondelle 45, comme on le voit bien sur la figure 12 est montée, par exemple, par surmoulage de la pièce ou piston 4 sur ladite rondelle.

Revenant à la figure 1, on voit que ce piston 4 est équipé d'un joint 19 assurant l'étanchéité entre ledit piston et la tige creuse 6. Comme expliqué au début de cette description, l'étanchéité à ce niveau sera toujours excellente par le fait que le joint 19 coopère avec la périphérie lisse de la tige 6, puisque le sillon hélicoïdal 14 n'est formé sur cette tige qu'en arrière du joint.

Sur les figures 5 et 12, on a montré un autre mode de réalisation de joint qui forme ici un joint unique 20 jouant à lui seul le rôle des joints 7 et 19 assurant respectivement l'étanchéité entre corps creux 2 et piston 4 et l'étanchéité entre piston 4 et tige creuse 6.

En se reportant à nouveau à la figure 5, on voit que la pièce formant piston 4 peut être munie d'un élément coupant 30, tel qu'une lame, qui entaille longitudinalement la périphérie interne du corps creux 2 pour avantageusement immobiliser en rotation le piston 4 lors de sa progression dans ledit corps creux.

Un tel élément coupant peut aussi être prévu sur une rondelle à lames découpées, comme on le voit en 42 sur la figure 9.

Le fonctionnement de l'appareil applicateur de la figure 1 se déduit immédiatement de la description qui précède.

Le bouton 8 pourra imprimer à la tige creuse 6 une rotation comprise par exemple entre 1/4 et 1/16° de tour. Lors de cette rotation, la ou les lames solidaires du piston 4 entailleront la tige 6 suivant un angle représentant la pente du sillon hélicoïdal 14.

La composante tangentielle de la force exercée sur la lame par l'effet de la rotation de la tige 6 est compensée par le frottement du ou des joints 7 entre piston 4 et corps creux 2, de sorte que, comme il a été dit précédemment, le ou les joints d'étanchéité 7 permettent de maintenir la pièce 4 immobile en rotation. La composante axiale est suffisamment grande (environ 5 à 10 fois plus élevée que la composante tangentielle, comme expliqué précédemment pour vaincre les forces de frottement axiales des joints de piston entre piston 4 et corps creux 2 et entre piston 4 et tige 6), de façon à faire avancer ledit piston d'une manière étanche, et sans rotation autour de son axe, dans le corps creux 2.

En se reportant à la figure 13, on voit un mode de réalisation d'appareil applicateur conforme à l'invention et muni de la rondelle 45 visible sur la figure 11, étant bien entendu qu'un autre type de rondelle, comme décrit précédemment, pourrait être utilisé.

Ici, le corps creux 2 formant réservoir R est ouvert à l'une de ses extrémités et conformé de façon à pouvoir recevoir un bouchon 39 coopérant de façon étanche avec le corps 2, par exemple au moyen d'un ou plusieurs bossages annulaires 39a.

A l'autre extrémité du corps 2, et à l'extérieur de celui-ci, est prévu un bouton rotatif 38 permettant l'entraînement en rotation de la tige 6 qui est pleine.

Sur cette tige 6, et dans le réservoir R, est maintenu un gel solide constituant par exemple un "stick" cosmétique déodorant qui sera utilisable après démontage du couvercle 39 et actionnement du bouton 38.

On observera ici que l'étanchéité parfaite entre piston 4 et tige pleine 6, comme il a été expliqué précédemment, évitera avantageusement, même à la longue, toute dessication du produit 33 ainsi que toute diminution sensible de son parfumage.

Bien entendu, l'invention n'est nullement limitée aux modes de réalisation décrits et illustrés qui n'ont été donnés qu'à titre d'exemple. C'est ainsi que l'angle d'affûtage des lames, leur nombre et leur forme plane ou courbe peuvent être quelconques, sans sortir du cadre de la présente invention. Egalement, au lieu d'être creuse, la tige de commande du piston pourrait être pleine, dans quel cas un orifice serait prévu dans le réservoir pour permettre la délivrance de fluide. Les moyens de commande de cette tige peuvent également être quelconques et autres que ceux décrits et représentés. Enfin, le dispositif selon cette invention peut trouver application dans des systèmes ou appareils autres qu'un appareil applicateur de fluide.

## Revendications

1. Dispositif d'entraînement en translation, d'une pièce (4) par la rotation d'une tige ou analogue (6) traversant ladite pièce qui est maintenue immobile en rotation, caractérisé en ce que ladite pièce (4) est munie d'au moins une lame (12, 15, 16, 41, 46) dont le tranchant (13, 16a, 46a) est incliné par rapport à un plan orthogonal à l'axe (X-X') de la tige (6) et vient mordre la périphérie externe lisse de cette tige (6) de façon à l'inciser hélicoïdalement lors de sa rotation et provoquer ainsi la translation de la pièce (4) le long de la tige (6) lors de cette rotation.

2. Dispositif selon la revendication 1, caractérisé en ce que la lame (12) est montée dans la pièce (4) de telle façon que son plan soit sensiblement perpendiculaire au plan tangent à la surface latérale externe de la tige (6), ledit plan tangent étant parallèle au tranchant (13) de la lame (12).

3. Dispositif selon la revendication 1, caractérisé en ce que la lame (12) est montée dans la pièce (4) de façon que son plan soit incliné par rapport au plan tangent à la surface latérale externe de la tige (6), ledit plan tangent étant parallèle au tranchant (13) de la lame (12).

4. Dispositif selon la revendication 3, caractérisé en ce que le plan de la lame (12)est incliné par rapport au plan tangent, du côté du sens de progression de la pièce précitée (4).

5. Dispositif selon la revendication 3 ou 4, caractérisé en ce que le tranchant de la lame (12) est en forme de dièdre droit et est constitué par une arête d'un bord (13a) de plaque parallélépipèdique.

6. Dispositif selon l'une des revendications précédentes, caractérisé en ce que l'angle (α) d'inclinaison du tranchant (13) de la lame (12) par rapport à une direction orthogonale à l'axe de la tige (6) est tel que la composante axiale de la force exercée sur la lame (12) par l'effet de la rotation de la tige (6) est plus élevée que la composante tangentielle de cette force.

7. Dispositif selon la revendication 6, caractérisé en ce que la composante axiale de la force exercée sur la lame (12) est 5 à 10 fois plus élevée que la composante tangentielle de cette force.

8. Dispositif selon l'une des revendications précédentes, caractérisé en ce que la lame précitée se compose de plusieurs lames (15, 16, 41) montées et agencées dans la pièce (4) de façon que leur tranchant (15a, 16a, 41a) soit orienté suivant une hélice cylindrique régulière.

9. Dispositif selon l'une des revendications 1 à 7, caractérisé en ce que la lame précitée forme une seule lame (46) dont le tranchant (46a) suit une ligne hélicoïdale cylindrique régulière.

10. Dispositif selon la revendication 8, caractérisé en ce que les lames précitées (16) sont formées par les deux branches en vis-à-vis d'un organe déformable sensiblement en forme de U (17) dont les branches sont respectivement insérables dans deux orifices (18) qui sont ménagés obliquement dans la pièce précitée (4) et qui sont décalés axialement et s'étendent de part et d'autre de l'axe (X-X') de la tige (6).

11. Dispositif selon la revendication 8, caractérisé en ce que les lames précitées (41) sont découpées dans une rondelle (40) rendue solidaire de la pièce précitée (4).

12. Dispositif selon la revendication 11, caractérisé en ce que la rondelle précitée (40) comporte une partie repliée (43) permettant son accrochage sur un élément (44) solidaire de la pièce précitée (4).

13. Dispositif selon la revendication 9, caractérisé en ce que la lame (46) à tranchant (46a) de forme hélicoïdale résulte d'une empreinte (47) pratiquée sur une rondelle ou analogue (45).

14. Dispositif selon l'une des revendications précédentes, caractérisé en ce que la pièce précitée (4) est munie d'au moins un joint d'étanchéité (19, 20) situé en avant de la ou des lames précitées (12, 15, 16, 41, 46) pour toujours coopérer avec la périphérie externe lisse de la tige (6).

15. Dispositif selon l'une des revendications 1 à 14, caractérisé en ce que la pièce précitée (4) est constituée par un piston qui coulisse de façon étanche dans un corps creux (2) formant récipient, et en ce que la tige (6) est actionnée en rotation d'un côté (4b) du piston par un moyen approprié, tel qu'un bouton rotatif (38), un bouton-poussoir (8) ou analogue, l'autre côté (4a) du piston délimitant avec le corps creux (2) un réservoir (R) de produit.

16. Dispositif selon la revendication 15, caractérisé par au moins un autre joint d'étanchéité (7) entre la périphérie du piston et la paroi du corps creux (2).

17. Dispositif selon la revendication 15 ou 16, caractérisé en ce que la pièce précitée (4) formant piston est munie d'un élément coupant (30) tel qu'une lame qui entaille longitudinalemnet la périphérie interne du corps creux (2) pour immobiliser en rotation le piston lors de sa progression dans ledit corps creux.

18. Dispositif selon l'une des revendications 15 à 17, caractérisé en ce que la tige précitée (6) est une tige creuse dont une extrémité (6a) débouche dans le réservoir (R).

19. Dispositif selon la revendication 18, caractérisé par un moyen applicateur, tel qu'un pinceau (10), une brosse ou un embout en mousse, en feutre ou en velours monté sur l'autre extrémité de la tige creuse (6).

20. Dispositif selon la revendication 18 ou 19, caractérisé en ce que l'autre extrémité précitée de la tige creuse forme une tête (9) faisant saillie de façon étanche du corps creux (2) grâce à encore un autre joint (11).

21. Application du dispositif selon l'une des revendications 1 à 20, à la réalisation d'un appareil applicateur de fluide visqueux tel que par exemple du vernis à ongle.

22. Application du dispositif selon l'une des revendications 1 à 17, à la réalisation d'un appareil applicateur d'un gel solide, tel qu'un gel cosmétique déodorant.

## Claims

1. Device for the translatory drive of a part (4) by the rotation of a rod or the like (6) extending through the said part which is held immovable against rotation, characterized in that the said part (4) is provided with at least one blade (12, 15, 16, 41, 46) the cutting edge (13, 16a, 46a) of which is inclined with respect to a plane orthogonal to the axis (X-X') of the rod (6) and is caused to bite into the external smooth periphery of this rod (6) so as to helically cut thereinto during its rotation and thus cause the translative motion of the part (4) along the rod (6) during this rotation.

2. Device according to claim 1, characterized in that the blade (12) is mounted in the part (4) so that its plane be substantially perpendicular to the plane tangent to the external side surface of the rod (6), the said tangent plane being parallel to the cutting edge (13) of the blade (12).

3. Device according to claim 1, characterized in that the blade (12) is mounted in the part (4) so that its plane be inclined with respect to the plane tangential to the external side surface of the rod (6), the said tangential plane being parallel to the cutting edge (13) of the blade (12).

4. Device according to claim 3, characterized in that the plane of the blade (12) is inclined with respect to the tangent plane towards the direction of advance of the aforesaid part (4).

5. Device according to claim 3 or 4, characterized in that the cutting edge of the blade (12) has the shape of a right-angled dihedron and is constituted by one edge of one side (13a) of a parallelepipedic plate.

6. Device according to one of the foregoing claims, characterized in that the angle (α) of inclination of the cutting edge (13) of the blade (12) with respect to a direction orthogonal to the axis of the rod (6) is such that the axial component of the force exerted upon the blade (12) by the effect of the rotation of the rod (6) is greater than the tangential component of this force.

7. Device according to claim 6, characterized in that the axial component of the force exerted upon the blade (10) is 5 to 10 times greater than the tangential component of this force.

8. Device according to one of the foregoing claims, characterized in that the aforesaid blade consists of several blades (15, 16, 41) mounted and arranged in the part (4) so that their cutting edge (15a, 16a, 41a) be directed along a regular cylindrical helix.

9. Device according to one of claims 1 to 7, characterized in that the aforesaid blade forms one single blade (46) the cutting edge (46a) of which follows a regular cylindrical helical line.

10. Device according to claim 8, characterized in that the aforesaid blades (16) are formed of the two mutually confronting legs of a deformable substantially U-shaped member (17) the legs of which are insertable into two apertures (18), respectively, which are formed obliquely in the aforesaid part (4) and which are axially offset and extend on either side of the axis (X-X') of the rod (6).

11. Device according to claim 8, characterized in that the aforesaid blades (41) are cut out in a washer (40) made fast to the aforesaid part (4).

12. Device according to claim 11, characterized in that the aforesaid washer (40) comprises a folded-back portion (43) permitting its being hooked upon an element (44) made fast to the aforesaid part (4).

13. Device according to claim 9, characterized in that the blade (46) with a cutting edge (46a) with a helical shape results from a stamp (47) provided on a washer or the like (45).

14. Device according to one of the foregoing claims, characterized in that the aforesaid part (4) is provided with at least one sealing joint (19, 20) located ahead of the aforesaid blade(s) (12, 15, 16, 41, 46) in order to always co-operate with the external smooth periphery of the rod (6).

15. Device according to one of claims 1 to 14, characterized in that the aforesaid part (4) is constituted by a piston which slides in a fluid-tight manner in a hollow body (2) forming a container and in that the rod (6) is actuated for rotation on one side (4b) of the piston by a suitable means such as a rotary knob (38), a push-button (8) or the like, the other side (4a) of the piston defining together with the hollow body (2) a tank (R) for a product.

16. Device according to claim 15, characterized by at least another sealing joint (7) between the periphery of the piston and the wall of the hollow body (2).

17. Device according to claim 15 or 16, characterized in that the aforesaid part (4) forming the piston is provided with a cutting element (30) such as a blade which longitudinally cuts into the internal periphery of the hollow body (2) for holding the piston immovable against rotation during its advancing in the said hollow body.

18. Device according to one of claims 15 to 17, characterized in that the aforesaid rod (6) is a hollow rod one end (6a) of which opens into the tank (R).

19. Device according to claim 18, characterized by an applicator means such as a paint brush (10), a brush or an end piece made from foam, from felt or from velvet and mounted on the other end of the hollow rod (6).

20. Device according to claim 18 or 19, characterized in that the aforesaid other end of the hollow rod forms a head (9) projecting in fluid-tight relationship from the hollow body (2) owing to still another joint (11).

21. Application of the device according to one of claims 1 to 20 to the provision of an apparatus for applying a viscous fluid such as a nail varnish for example.

22. Application of the device according to one of claims 1 to 17 to the provision of an apparatus for applying a solid gel such as a deodorant cosmetic gel.

## Patentansprüche

1. Vorrichtung zur Parallelverschiebung eines Werkstückes (4) durch die Drehung einer das besagte Werkstück durchsetzenden Stange oder dergleichen (6), welches drehfest gehalten wird, dadurch gekennzeichnet, dass das besagte Werkstück (4) mit wenigstens einem Blatt (12, 15, 16, 41, 46) versehen ist, dessen Schneidkante (13, 16a, 46a) in bezug auf einer zur Achse (X-X') der Stange (6) senkrechten Ebene geneigt ist und veranlasst wird, den glatten Aussenumfang dieser Stange (6) anzugreifen, um ihn während ihrer Drehung schraubenförmig einzuschneiden und somit die Parallelverschiebung des Werkstückes (4) entlang der Stange (6) während dieser Drehung zu verursachen.

2. Vorrichtung nach Anspruch 1, dadurch gekennzeichnet, dass das Blatt (12) in dem Werkstück (4) derart angeordnet ist, das seine Ebene etwa senkrecht zu der zu der äusseren Seitenfläche der Stange (6) tangierenden Ebene ist, wobei die besagte Tangentialebene mit der Schneidkante (13) des Blattes (12) parallel ist.

3. Vorrichtung nach Anspruch 1, dadurch gekennzeichnet, dass das Blatt (12) in dem Werkstück (4) derart angeordnet ist, dass seine Ebene in bezug auf die zu der äusseren Seitenfläche der Stange (6) tangentialen Ebene geneigt ist, wobei die besagte Tangentialebene mit der Schneidkante (13) des Blattes (12) parallel ist.

4. Vorrichtung nach Anspruch 3, dadurch gekennzeichnet, dass die Ebene des Blattes (12) in bezug auf die Tangentialebene zur Richtung des Vorschubes des vorgenannten Werkstückes (4) hin geneigt ist.

5. Vorrichtung nach Anspruch 3 oder 4, dadurch gekennzeichnet, dass die Schneidkante des Blattes (12) die Gestalt eines rechtwinklichen Flächenwinkels hat und durch eine Kante eines Randes (13a) einer quaderförmigen Platte gebildet wird.

6. Vorrichtung nach einem der vorangehenden Ansprüche, dadurch gekennzeichnet, dass der Winkel (α) der Neigung der Schneidkante (13) des Blattes (12) in bezug auf eine zur Achse der Stange (6) senkrechten Richtung derart ist, dass die Axialkomponente der auf dem Blatt (12) ausgeübten Kraft durch die Wirkung der Drehung der Stange (6) grösser ist, als die Tangentialkomponente dieser Kraft.

7. Vorrichtung nach Anspruch 6, dadurch gekennzeichnet, dass die Axialkomponente der auf das Blatt (12) ausgeübten Kraft fünf bis zehnmal grösser ist als die Tangentialkomponente dieser Kraft.

8. Vorrichtung nach einem der vorangehenden Ansprüche, dadurch gekennzeichnet, dass das vorgenannte Blatt aus mehreren Blättern (15, 16, 41) besteht, die derart in dem Werkstück (4) angeordnet und eingerichtet sind, dass ihre Schneidkante (15a, 16a, 41a) entlang einer regelmässigen zylindrischen Schraubenlinie gerichtet ist.

9. Vorrichtung nach einem der Ansprüche 1 bis 7, dadurch gekennzeichnet, dass das vorgenannte Blatt ein einziges Blatt (46) bildet, dessen Schneidkante (46a) eine regelmässige zylindrische schraubenförmige Linie folgt.

10. Vorrichtung nach Anspruch 8, dadurch gekennzeichnet, dass die vorgenannten Blätter (16) durch die beiden einander gegenüberliegenden Schenkel eines verformbaren etwa U-förmigen Gliedes (17) gebildet werden, dessen Schenkel jeweils in zwei Öffnungen (18), die in dem vorgenannten Werkstück (4) schräg gebildet sind und die axial versetzt sind und sich beiderseits der Achse (X-X') der Stange (6) erstrecken, einfügbar sind.

11. Vorrichtung nach Anspruch 8, dadurch gekennzeichnet, dass die vorgenannten Blätter (41) in einer mit dem vorgenannten Werkstück (4) fest verbundenen Scheibe (40) ausgeschnitten sind.

12. Vorrichtung nach Anspruch 11, dadurch gekennzeichnet, dass die vorgenannte Scheibe (40) einen ihr Anhaken an einem mit dem vorgenannten Werkstück (4) fest verbundenen Element (46) gestattenden umgebogenen Teil (43) aufweist.

13. Vorrichtung nach Anspruch 9, dadurch gekennzeichnet, dass das Blatt (46) mit schraubenförmiger Schneidkante (46a) sich aus einer in einer Scheibe oder dergleichen (45) gebildeten Prägung (47) ergibt.

14. Vorrichtung nach einem der vorangehenden Ansprüche, dadurch gekennzeichnet, dass das vorgenannte Werkstück (4) mit wenigstens einer vor dem bzw. den vorgenannten Blatt bzw. Blättern (12, 15, 16, 41, 46) gelegenen Dichtung (19, 20) versehen ist, um immer mit dem glatten Aussenumfang der Stange (6) zusammenzuwirken.

15. Vorrichtung nach einem der Ansprüche 1 bis 14, dadurch gekennzeichnet, dass das vorgenannte Werkstück (4) durch einen Kolben gebildet wird, der in einem einen Behälter bildenden hohlen Körper (2) in dichter Weise gleitet und dass die Stange (6) auf einer Seite (4b) des Kolbens durch ein geeignetes Mittel, wie einen Drehknopf (38), einen Druckknopf (8) oder dergleichen im Drehantrieb betätigt wird, wobei die andere Seite (4a) des Kolbens mit dem hohlen Körper (2) einen Produktbehälter (R) abgrenzt.

16. Vorrichtung nach Anspruch 15, gekennzeichnet durch wenigstens eine andere Dichtung (7) zwischen dem Umfang des Kolbens und der Wand des hohlen Körpers (2).

17. Vorrichtung nach Anspruch 15 oder 16, dadurch gekennzeichnet, dass das einen Kolben bildende vorgenannte Werkstück (4) mit einem schneidenden Element (30), wie eine Klinge versehen ist, das den Innenumfang des hohlen Körpers (2) in Längsrichtung einschneidet, um den Kolben während seiner Vorwärtsbewegung in dem besagten hohlen Körper festzuhalten.

18. Vorrichtung nach einem der Ansprüche 15 bis 17, dadurch gekennzeichnet, dass die vorgenannte Stange (6) eine hohle Stange ist, dessen Ende (6a) in den Behälter (R) einmündet.

19. Vorrichtung nach Anspruch 18, gekennzeichnet durch ein an dem anderen Ende der hohlen Stange (6) angeordnetes Auftragsmittel, wie einen Pinsel (10), eine Bürste oder ein Endstück aus Schaum, Filz oder Samt.

20. Vorrichtung nach Anspruch 18 oder 19, dadurch gekennzeichnet, dass das vorgenannte andere Ende der hohlen Stange einen dank noch einer anderen Dichtung (11) in abdichtender Weise aus dem hohlen Körper (12) vorspringenden Kopf (9) bildet.

21. Anwendung der Vorrichtung nach einem der Ansprüche 1 bis 20 an die Schaffung eines Gerätes zum Auftragen eines zähflüssigen Fliessmittels, wie z.B. von Nagellack.

22. Anwendung der Vorrichtung nach einem der Ansprüche 1 bis 17 an die Schaffung eines Gerätes zum Auftragen eines festen Gels, wie eines geruchlos machenden kosmetischen Gels.
